# EUROPÄISCHE PATENTSCHRIFT

(11) **EP 1 615 811 B1**
(45) Veröffentlichungstag und Bekanntmachung des Hinweises auf die Patenterteilung: **30.09.2009**
(21) Anmeldenummer: 04721824.3
(22) Anmeldetag: 19.03.2004
(51) Int. Cl.: B60T 8/32, B60T 8/88, B60T 13/74, B60T 17/22

(54) **ELEKTRISCHES, DEZENTRALES BREMSSYSTEM IN EINEM FAHRZEUG**
ELECTRIC, DECENTRALISED BRAKE SYSTEM IN A VEHICLE
SYSTEME DE FREINAGE ELECTRIQUE DECENTRALISE POUR UN VEHICULE

(30) Priorität: 10.04.2003 DE 10316452
(43) Veröffentlichungstag der Anmeldung: 18.01.2006
(73) Patentinhaber: ROBERT BOSCH GMBH, 70442 Stuttgart (DE)
(72) Erfinder: WEIBERLE, Reinhard, 71665 Vaihingen/Enz (DE); KOEGEL, Udo, 74343 Sachsenheim (DE)
(86) Internationale Anmeldenummer: PCT/DE2004/000567
(87) Internationale Veröffentlichungsnummer: WO 2004/091988

(56) Entgegenhaltungen:
- DE-A- 19 826 131
- DE-A- 19 918 995
- DE-A- 19 937 156
- US-A- 6 029 108
- US-B1- 6 345 225
- US-B1- 6 540 309

## Beschreibung

### STAND DER TECHNIK

Die vorliegende Erfindung betrifft ein elektrisches, dezentrales Bremssystem in einem Fahrzeug, und insbesondere ein elektrisches, dezentrales Brake-by-Wire-System für ein vierrädriges Kraftfahrzeug.

Brake-by-Wire-Bremssysteme, welche in der Regel nicht mit einem mechanischen, hydraulischen oder pneumatischen Backup-System versehen sind, müssen insbesondere ein Augenmerk auf die Verfügbarkeit, d.h. eine Bremsfunktion, auch im Fehlerfall legen. Brake-by-Wire-Systeme mit zentralem Brems-Pedal-Modul sind beispielsweise aus der den Oberbegriff bildenden Offenlegungsschrift DE 198 26 131 A1, dem VDI-Bericht Nr. 1641, 2001, "Fehlertolerante Komponenten für Drive-by-Wire-Systeme" von R. Isermann und der unter der ISBN Nr. 3-18-342612-9 im VDI-Verlag im Jahr 2000 erschienenen Publikation "Fehlertolerante Pedaleinheit für elektromechanisches Bremssystem" von Stefan Stölzl bekannt.

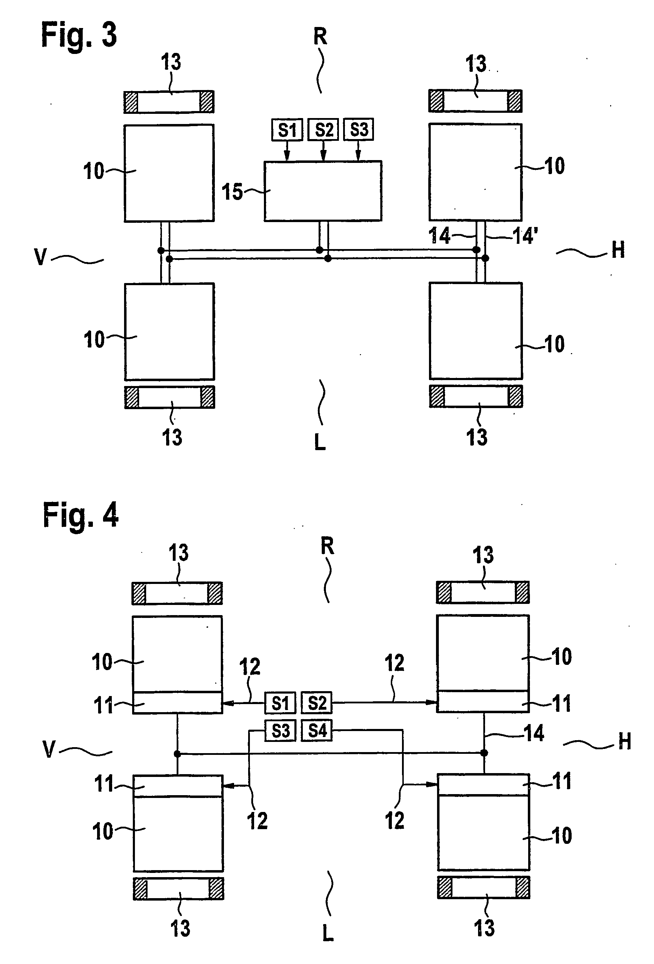

Vorrangig bei Systemen mit einem solchen zentralen Modul ist die sichere Erfassung der Bremspedalbetätigung, die Betrachtung einer Feststellbremse sei hier nicht weiter beachtet, sowie die Distribution der Information der Bremsbetätigung an dezentrale, intelligente Radbremsmodule. Die Sicherheit in einem derartigen System wird einerseits durch ein diversifiziertes und mehrfach redundantes Sensorkonzept, siehe Bremspedalsensoren S1 bis S3 gemäß Fig. 3, und andererseits durch ein redundantes Prozessor- und Kommunikationskonzept, siehe ersten und zweiten Kommunikationsbus 14, 14' zwischen dem zentralen Bremspedalmodul 15 und den vier Radbremsmodulen 10, welche jeweils ein Rad 13 steuern, unter der Randbedingung eines mehrkreisigen Bordnetzes gewährleistet.

An die Kommunikationseinrichtung bzw. das Kommunikationssystem wird darüber hinaus die Anforderung an ein deterministisches Verhalten gestellt, woraus unmittelbar der Einsatz zeitgesteuerter Kommunikationssysteme, wie z.B. FlexRay, TTCAN oder TTP resultiert. Dabei muss das Bremspedalmodul und das Kommunikationssystem ein Fail-Operational-Verhalten aufweisen. Um der Forderung eines "Fail-Operational"-Verhaltens bei Einfach-Fehlern nachkommen zu können, muss das Bremspedalmodul mindestens drei redundante Prozessoren sowie drei redundante und gegebenenfalls diversifizierte Sensoren für die Betriebsbremse aufweisen. Für das Kommunikationssystem werden mindestens zwei redundante Kommunikationskanäle benötigt.

In der Offenlegumesschrift DE 199 37 156 A1 ist ein elektromechanisches Bremssystem offenbart, welches eine dezentrale Erfassung der Bremspedalbetätigung aufweist. Dabei kann von einer verteilten, dezentralen Pedal-Modul-Funktionalität gesprochen werden.

Aus der DE 199 18 995 A ist ein elektrisches, dezentrales Bremssystem mit Sensoren bekannt, wobei das Bremssystem zwei Datenbusse zum Empfangen und Austauschen von Daten zwischen mehr als zwei Radmodulen unterschiedlicher Fahrzeugseiten aufweist.

Innerhalb dieses mit Bezug auf Fig. 4 dargestellten elektromechanischen Brems-Systemkonzepts sind vier diversifizierte Sensoren S1 bis S4 zur Erfassung der Betätigung einer Bremsbetätigungseinrichtung (nicht dargestellt) vorgesehen, welche beispielsweise jeweils den Pedalweg und den Pedalwinkel ermitteln. Jeder der Sensoren S1 bis S4 wird dabei genau an ein Radmodul 10 mit einer Einrichtung 11 zur Bestimmung einer Bremsnachfrage angeschlossen. Die Radmodule 10 kommunizieren miteinander über einen Systembus 14 und tauschen die erforderlichen Sensorinformationen bzw. -daten aus, berechnen parallel dazu Funktionsalgorithmen und stimmen sich über ein Protokoll derart ab, dass in jedem Radmodul 10 dieselben Daten, d.h. Sensor-Ist-Werte und Sensor-/Funktionsstati, vorliegen und identische Entscheidungen getroffen werden können.

Folglich wird auf diese Weise eine symmetrische, dezentrale Systemarchitektur bereitgestellt, wobei der geforderte "Fail-Operational"-Ansatz des zentralen Pedalmoduls gemäß Fig. 3 hierbei, d.h. gemäß Fig. 4, über die Redundanz der intelligenten Radmodule 10, 11 abgebildet wird. Tritt nun jedoch ein Common-Mode-Fehler im Kommunikationssystem 14 auf, beispielsweise durch einen mechanischen Kabelbaumabriss im Bereich des Radhauses durch Fremdeinwirkung, beispielsweise bei einer Geländefahrt, führt dies insbesondere bei einer Bus-Topologie des Kommunikationssystems 14 unabdingbar zu einem Totalverlust der Kommunikation Jedes Radmodul 10 kann in einem solchen Fall nur noch auf einen Sensorwert zurückgreifen, welcher jedoch nicht mehr ausreichend plausibilisiert werde kann. Folglich können unterschiedliche Bremskräfte an den verschiedenen Rädern 13 des Fahrzeugs angreifen, welches zu einem Giermoment und damit zum Schiefziehen des Fahrzeugs führen kann. Unabhängig von der Strategie des Backup-Managements stellt dies bereits bei einem Einzelfehler einen erheblichen Verlust an Sicherheit dar.

### VORTEILE DER ERFINDUNG

Das elektrische dezentrale Bremssystem mit den Merkmalen des Anspruchs 1 weist gegenüber dem bekannten Lösungsansatz den Vorteil auf, dass zumindest ein Teil der Radmodule auch nach einem Common-Mode-Fehler bzw. nach Auftreten von zwei Einfach-Fehlern Sensorwerte durch Vergleich mit mindestens einem weiteren Sensorwert plausibilisieren können und somit eine Zweitfehler-Festigkeit gewährleistet wird.

Dadurch wird eine erhöhte Sicherheit und Verfügbarkeit der Betriebsbremse im Fehlerfall sichergestellt, welches bei reinen Brake-by-Wire-Systemen ohne mechanisches/hydraulisches Backup für eine sichere Fahrt in eine Werkstatt erforderlich ist.

Die der vorliegenden Erfindung zugrunde liegende Idee besteht im wesentlichen darin, dass zumindest ein Teil der Radmodule auch nach einem Common-Mode-Fehler bzw. nach Auftreten von zwei Einfach-Fehlern Sensorwerte durch Vergleich mit mindestens einem weiteren Sensorwert plausibilisieren können.

Mit anderen Worten wird ein elektrisches, dezentrales Bremssystem bereitgestellt mit: mindestens vier Sensoren zum Erfassen der Betätigung einer Bremsbetätigungseinrichtung; jeweils einem Bremsmodul pro bremsbarem Fahrzeugrad zum Erfassen von Sensordaten und Ansteuern einer Bremseinrichtung eines entsprechenden Rades; mindestens einer ersten Kommunikationseinrichtung, mit der alle Bremsmodule zum Austauschen von Daten miteinander verbunden sind; und einer elektrischen Verbindungseinrichtung, mittels welcher jeweils ein Sensor mindestens mit einem Bremsmodul verbunden ist, wobei das Bremssystem mindestens eine weitere Kommunikationseinrichtung zum Empfangen und/oder Austauschen von Daten zwischen mindestens zwei Radmodulen gegenüberliegender Fahrzeugseiten aufweist.

Ein vorderes Radmodul einer Fahrzeugseite ist mit einem hinteren Radmodul der anderen Fahrzeugseite über eine zweite Kommunikationseinrichtung und ein vorderes Radmodul der anderen Fahrzeugseite mit einem hinteren Radmodul der einen Fahrzeugseite über eine dritte Kommunikationseinrichtung zum Austauschen von Daten verbunden. Dies birgt den Vorteil, dass nach Auftreten von zwei unabhängigen, die Kommunikationseinrichtungen betreffenden Einfach-Fehlern oder eines Common-Mode-Fehlers (z.B. durch mechanische Fremdeinwirkung im Bereich des Radhauses) immer noch eine Kommunikation und damit eine Plausibilisierung der Sensorwerte zwischen mindestens zwei Radbremsmodulen auf gegenüberliegenden Fahrzeugseiten möglich ist.

In den Unteransprüchen finden sich vorteilhafte Weiterbildungen und Verbesserungen des im Anspruch 1 angegebenen Bremssystems.

Gemäß einer bevorzugten Weiterbildung ist die zweite Kommunikationseinrichtung identisch der ersten Kommunikationseinrichtung aufgebaut, und jeder Sensor ist mit einem zweiten Radmodul der gegenüberliegenden Fahrzeugseite verbunden. Auf diese Weise kann auch bei Auftreten eines Common-Mode-Fehlers im Kommunikationssystem, d.h. beide Kommunikationseinrichtungen bzw. -stränge fallen aus, die notwendige und sichere Plausibilisierung der Sensorwerte über die zusätzliche Duplex-Anordnung der beiden lokalen Sensoren erfolgen.

Gemäß einer weiteren bevorzugten Weiterbildung sind mehr als vier Sensoren zum Erfassen der Betätigung der Bremsbetätigungseinrichtung vorgesehen, welche paarweise den Radmodulen zugewiesen sind. Vorteilhaft daran ist eine weitere Redundanzerhöhung bei geringem Aufwand.

Gemäß einer weiteren bevorzugten Weiterbildung werden die Kommunikations einrichtungen durch serielle Bussysteme gebildet. Dies gestattet auf vorteilhafte Weise den Einsatz bekannter Kommunikationsplattformen.

### ZEICHNUNG

Ausführungsbeispiele der Erfindung sind in den Zeichnungen dargestellt und in der nachfolgenden Beschreibung näher erläutert.

Es zeigen:
Fig. 1 ein schematisches Blockschaltbild eines Bremssystems zur Erläuterung einer Ausführungsform der vorliegenden Erfindung;
Fig. 2 ein schematisches Blockschaltbild eines beispielhaften Bremssystems;
Fig. 3 ein schematisches Blockschaltbild eines bekannten Bremssystems; und
Fig. 4 ein schematisches Blockschaltbild eines weiteren bekannten Bremssystems.

### BESCHREIBUNG DES AUSFÜHRUNGSBEISPIELS

In den Figuren bezeichnen gleiche Bezugszeichen gleiche oder funktionsgleiche Bestandteile.

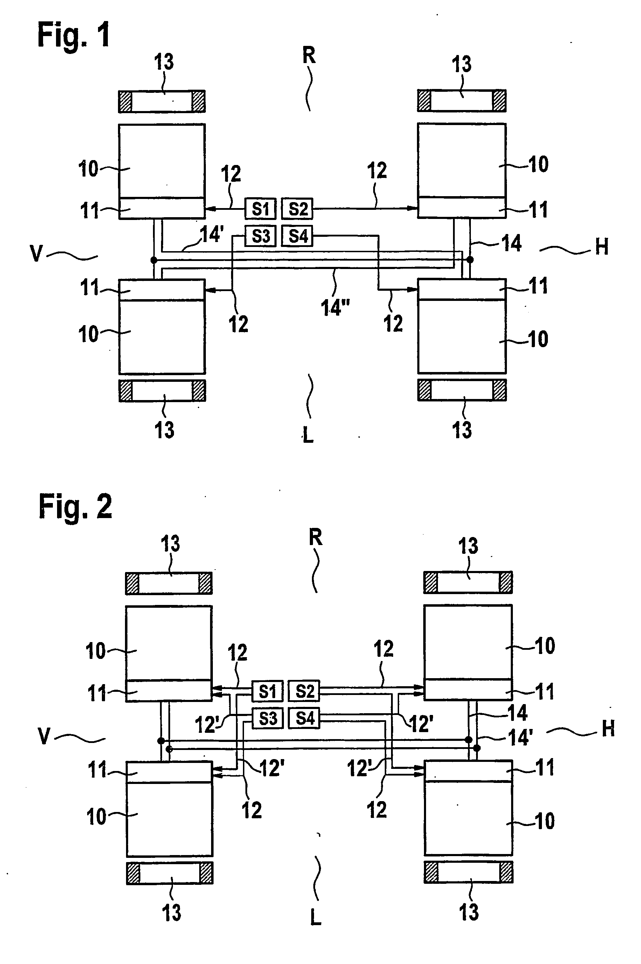

In Fig. 1 ist schematisch ein Blockdiagramm eines elektrischen Bremssystems dargestellt, welches vier Sensoren S1, S2, S3 und S4 aufweist. Die vier Sensoren S1 bis S4 ermitteln eine Betätigung einer Bremsbetätigungseinrichtung (nicht dargestellt), wie beispielsweise ein Bremspedal, welches von einem Fahrzeugbenutzer betätigt wird. Die vier Sensoren S1 bis S4 detektieren alle die gleichen Parameter, wie beispielsweise einen Pedalweg und einen Pedalwinkel. Intelligente Radbremsmodule 10 bzw. Radmodule, welche über eine Einrichtung 11 zum Bestimmen der Bremsnachfrage bzw. des Bremswunsches verfügen (break demand determination), sind über eine elektrische Leitung 12 jeweils mit einem der vier Sensoren S1 bis S4 verbunden. Vier Räder 13 sind über die Radmodule 10 bzw. damit verbundene Radbremseinrichtungen (nicht dargestellt) verbunden.

Außerdem sind die Radbremsmodule 10 alle über eine Kommunikationseinrichtung 14 miteinander verbunden, welche einen Datenaustausch zwischen den intelligenten Radbremsmodulen 10 zulässt. Gemäß der Ausführungsform in Fig. 1 ist darüber hinaus eine zweite und dritte Kommunikationseinrichtung 14' und 14" vorgesehen, wobei die Kommunikationseinrichtungen 14', 14" jeweils ein Radmodul 10 einer Fahrzeugseite R, L mit einem Radbremsmodul 10 der anderen Fahrzeugseite L, R des Fahrzeugs zum Datenaustausch verbindet, und vorzugsweise z.B. das vordere rechte Rad RV mit dem hinteren linken Rad LH kontaktiert und entsprechend umgekehrt, so dass eine Anbindung über Kreuz gewährleistet wird. Die erste, zweite und dritte Kommunikationseinrichtung 14, 14' und 14" sind vorzugsweise ein serielles Bussystem.

Die Kommunikationseinrichtung 14 ermöglicht die Kommunikation zwischen allen vier Radbremsmodulen 10 und vorzugsweise weiterer Steuereinrichtungen, wie beispielsweise ABS- oder VDM-Steuermodule. Über diesen Kommunikationskanal 14 werden die Pedalsensorwerte der Sensoren S1 bis S4 der vier Radbremsmodule 10 ausgetauscht. Über die beiden Bremskreisdatenbusse 14' und 14" werden zusätzlich jeweils die Pedalsensorwerte der beiden zugehörigen Radbremsmodule 10VL, HR; VR, HL gegenseitig ausgetauscht. Somit besteht eine Möglichkeit zur Überwachung der über den ersten Kommunikationskanal 14 gesendeten Daten, wenn auch eingeschränkt, über die beiden Bremskreisdatenbusse 14', 14".

Nach Auftreten von zwei unabhängigen, die Kommunikationseinrichtungen 14, 14', 14" betreffenden Einfach-Fehlern oder eines Common-Mode-Fehlers, z.B. durch mechanische Fremdeinwirkung im Bereich des Radhauses und einen damit verbundenen Abriss der Kommunikationsbusverbindungen zu dem entsprechenden Rad, ist somit immer noch eine Kommunikationseinrichtung 14' oder 14" intakt und damit eine Plausibilisierung der Pedalsensorwerte der Sensoren S1 bis S4 zwischen mindestens zwei Radbremsmodulen 10 VR, HL oder VL, HR möglich. Ein derartiges System verfügt damit über die Möglichkeit, Radbremsmodule 10, welche nicht mehr über ein Kommunikationssystem 14, 14', 14" kommunizieren können, abzuschalten, um unerwünschte oder nicht abgestimmte Bremskräfte und damit ein mögliches Schiefziehen des Fahrzeugs zu vermeiden. Dies resultiert in einer erhöhten Sicherheit sowohl im Fall eines Einfach-Fehlers als auch im Fall eines doppelten Einfach-Fehlers bzw. eines Common-Mode-Fehlers.

In Fig. 2 ist ein schematisches Blockschaltbild eines beispielhaften elektrischen Bremssystems beispielhaften dargestellt. Das Bremssystem gemaß Fig. 2 unterscheidet sich von der mit Bezug auf Fig. 1 erläuterten Ausführungsform im wesentlichen durch die veränderte Kommunikations- bzw. Verbindungsstruktur zwischen den Radbremsmodulen 10. Wie in der erfindungsgemäßen Ausführungsform verfügt auch das beispielhafte Bremssystem über eine Kommunikationseinrichtung 14, vorzugsweise ein serieller Datenbus, welcher alle Radmodule 10 mit abbremsbaren Rädern 13 miteinander verbindet. Zusätzlich dazu ist ein zweiter zum ersten Kommunikationssystem 14 redundanter Kommunikationsstrang 14' vorgesehen, welcher ebenfalls alle Radmodule 10 miteinander verbindet. Neben den elektrischen Verbindungen 12 zwischen den Sensoren S1 bis S4 zum Erfassen der Betätigung einer Bremsbetätigungseinrichtung (nicht dargestellt) und den Radmodulen 10 gemäß Fig. 1 sind in Fig. 2 weitere elektrische Verbindungen 12' vorgesehen. Die elektrischen Verbindungen 12' verlaufen von einem jeweiligen Sensor, z.B. S2, zu einem Radmodul 10, welches axial neben dem mit der Verbindung 12 des Sensors, z.B. S2, verbundenen Radbremsmoduls 10 liegt. Das heißt, jeder der Sensoren S1 bis S4 ist jeweils mit zwei Radbremsmodulen 10, welche in einer Achse liegen, über die Verbindung 12 und die Verbindung 12' elektrisch verbunden.

Das dezentrale Systemkonzept für die Benutzer-Bremswunscherfassung gemäß dem beispielhaften Bremssystem weist somit an jedem der vier Radmodule genau zwei angeschlossene der vier Sensoren S1 bis S4 auf. Alternativ hierzu sind auch Lösungen denkbar, bei denen mehr als vier physikalische Pedalsensoren S1, S2, ... paarweise den vier Radmodulen 10 zugewiesen werden. Der Vorteil des beispielhaften Bremssystems liegt darin begründet, dass auch nach Auftreten von zwei unabhängigen Einfach-Fehlern oder eines Common-Mode-Fehlers im Kommunikationssystem 14, 14', die Radmodule 10 zwar ebenfalls nicht mehr miteinander kommunizieren können, eine notwendige und sichere Plausibilisierung der Pedalsensorwerte der Sensoren S1 bis S4 jedoch trotzdem über die zusätzliche Duplex-Anordnung der beiden lokalen Sensoren S1 bis S4 erfolgen kann. Auf diese Weise ist es möglich, Radmodule 10, welche nicht mehr über ein Kommunikationssystem 14, 14' miteinander kommunizieren können, sicher abzubremsen, woraus eine erhöhte Sicherheit bezüglich des Ausfalls des Kommunikationssystems sowohl bei einem doppelt auftretenden Einfach-Fehler als auch bei einem Common-Mode-Fehler folgert.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Obwohl für zweiachsige Fahrzeuge beschrieben, lässt sich die Erfindung auch auf mehrachsige Fahrzeuge, wie beispielsweise dreiachsige Lkws, entsprechend übertragen. Darüber hinaus ist ebenfalls vorstellbar, die Verbindungen 12, 12' zwischen den Sensoren S1 bis S4 nicht nur monodirektional, wie durch die Pfeile in den Zeichnungen dargestellt, auszuführen, sondern insbesondere für das beispielhafte Bremssystem eine bidirektionale Kommunikation über einen entsprechenden Sensor zwischen den zwei an den Sensor angeschlossenen Radmodulen 10 zu ermöglichen. Unter dieser Voraussetzung wäre auch eine über Kreuz Verbindung von Radmodulen 10 über die Verbindungseinrichtungen 12, 12' zwischen Radmodulen 10 im Gegensatz zur beschriebenen Verbindung von Radmodulen 10 einer Achse realisierbar.

### BEZUGSZEICHENLISTE

| | |
|---|---|
| 10 | intelligentes Radmodul, vorzugsweise Radbremsmodul |
| 11 | Einrichtung zum Bestimmen der Bremsnachfrage |
| 12 | Elektrische Verbindung zwischen Sensor und Radmodul |
| 12' | Elektrische Verbindung zwischen Sensor und Radmodul |
| 13 | Fahrzeugrad |
| 14 | Kommunikationseinrichtung, z.B. serielles Bussystem |
| 14' | Kommunikationseinrichtung, z.B. serielles Bussystem |
| 14" | Kommunikationseinrichtung, z.B. serielles Bussystem |
| 15 | zentrales Bremspedalmodul |
| R, L | rechts, links |
| V, H | vorne, hinten |
| S1-S4 | Sensor zur Erfassung der Betätigung einer Bremsbetätigungseinrichtung |

## Patentansprüche

1. Elektrisches, dezentrales Bremssystem mit:
mindestens vier Sensoren (S1 bis S4) zum Erfassen der Betätigung einer Bremsbetätigungseinrichtung;
jeweils einem Bremsmodul (10) pro bremsbarem Fahrzeugrad (13) zum Erfassen von Sensordaten und Ansteuern einer Bremseinrichtung eines entsprechenden Rades (13);
mindestens einer ersten Kommunikationseinrichtung (14), mit der alle Bremsmodule (10) zum Austauschen von Daten miteinander verbunden sind; und
einer elektrischen Verbindungseinrichtung (12, 12'), mittels welcher jeweils ein Sensor (S1 bis S4) mindestens mit einem Bremsmodul (10) verbunden ist,
**dadurch gekennzeichnet,**
**dass** ein vorderes Radmodul (10) einer Fahrzeugseite (R) mit einem hinteren Radmodul (10) der anderen Fahrzeugseite (L) über eine zweite Kommunikationseinnchtung (14') und ein vorderes Radmodul (10) der anderen Fahrzeugseite (L) mit einem hinteren Radmodul (10) der einen Fahrzeugseite (R) über eine dritte Kommunikationseinrichtung (14") zum Austauschen von Daten verbunden sind.

2. Bremssystem nach Anspruch 1,
**dadurch gekennzeichnet,**
**dass** die zweite Kommunikationseinrichtung (14') identisch der ersten Kommunikationseinrichtung (14) aufgebaut ist, und jeder Sensor (S1 bis S4) mit einem zweiten Radmodul (10) der gegenüberliegenden Fahrzeugseite (R, L) einer gleichen Achse verbunden ist.

3. Bremssystem nach Anspruch 1 oder 2,
**dadurch gekennzeichnet,**
**dass** mehr als vier Sensoren (S1 bis S4) zum Erfassen der Betätigung der Bremsbetätigungseinrichtung vorgesehen sind, welche paarweise den Radmodulen (10) zugewiesen sind.

4. Bremssystem nach einem der vorangehenden Ansprüche,
**dadurch gekennzeichnet,**
**dass** die Kommunikationseinrichtungen (14, 14', 14") durch serielle Bussysteme gebildet sind.

5. Bremssystem nach einem der vorangehenden Ansprüche,
**dadurch gekennzeichnet,**
**dass** die Daten, welche über die Kommunikationseinrichtungen (14,14', 14") austauschbar sind. Sensordaten der Sensoren (S1 bis S4) aufweisen.

6. Bremssystem nach einem der vorangehenden Ansprüche,
**dadurch gekennzeichnet,**
**dass** die Bremsmodule (10) jeweils eine Einrichtung (11) zur Bestimmung der Betätigungsstärk der Bremsbetätigungseinrichtung aufweisen.

7. Bremssystem nach einem der vorangehenden Ansprüche,
**dadurch gekennzeichnet,**
**dass** das Bremssystem ein Pkw-Bremssystem mit vier bremsbaren Rädern (13) ist

## Claims

1. Electric, decentralized brake system having:
at least four sensors (S1 to S4) for sensing the activation of a brake activation device;
in each case one brake module (10) per brakable vehicle wheel (13) for acquiring sensor data and actuating a brake device of a corresponding wheel (13);
at least a first communication device (14), by means of which all the brake modules (10) are connected to one another in order to exchange data; and
an electric connecting device (12, 12') by means of which in each case one sensor (S1 to S4) is connected to at least one brake module (10),
**characterized**
**in that** a front wheel module (10) of one side (R) of the vehicle is connected to a rear wheel module (10) of the other side (L) of the vehicle via a second communication device (14'), and a front wheel module (10) of the other side (L) of the vehicle is connected to a rear wheel module (10) of the one side (R) of the vehicle via a third communication device (14") in order to exchange data.

2. Brake system according to Claim 1,
**characterized**
**in that** the second communication device (14') is of identical design to the first communication device (14), and each sensor (S1 to S4) is connected to a second wheel module (10) of the opposite side (R, L) of the vehicle on the same axle.

3. Brake system according to Claim 1 or 2,
**characterized**
**in that** more than four sensors (S1 to S4) are provided for sensing the activation of the brake activation device, which sensors (S1 to S4) are assigned in pairs to the wheel modules (10).

4. Brake system according to one of the preceding claims,
**characterized**
**in that** the communication devices (14, 14', 14") are formed by serial bus systems.

5. Brake system according to one of the preceding claims,
**characterized**
**in that** the data which can be exchanged via the communication devices (14, 14', 14") comprise sensor data of the sensors (S1 to S4).

6. Brake system according to one of the preceding claims,
**characterized**
**in that** the brake modules (10) each have a device (11) for determining the degree of activation of the brake activation device.

7. Brake system according to one of the preceding claims,
**characterized**
**in that** the brake system is a passenger car brake system with four brakable wheels (13).

## Revendications

1. Système électrique de freinage décentralisé, qui présenté :
au moins quatre détecteurs (S1 à S4) qui détectent l'actionnement d'un dispositif d'actionnement des freins,
pour chaque roue freinable (13) du véhicule, un module de freinage (10) qui détecte les données des détecteurs et commande un dispositif de freinage de la roue (13) correspondante,
au moins un premier dispositif de communication (14) auquel tous les modules de freinage (10) sont reliés pour échanger des données entre eux et
un dispositif électrique de liaison (12, 12') au moyen duquel chaque détecteur (S1 à S4) est relié à au moins un module de freinage (10),
**caractérisé en ce que**
pour l'échange de données, un module (10) de roue avant du côté (R) du véhicule est relié à un module (10) de roue arrière de l'autre côté (L) du véhicule par un deuxième dispositif de communication (14') et un module (10) de roue avant de l'autre côté (L) du véhicule est relié à un module (10) de roue arrière du côté (R) du véhicule par un troisième dispositif de communication (14 ").

2. Système de freinage selon la revendication 1, **caractérisé en ce que** le deuxième dispositif de communication (14') a une structure identique à celle du premier dispositif de communication (14) et chaque détecteur (S1 à S4) est relié à un deuxième module (10) d'une roue du côté opposé (R, L) du même essieu du véhicule.

3. Système de freinage selon les revendications 1 ou 2, **caractérisé en ce que** plus de quatre détecteurs (S1 à S4) sont prévus pour détecter l'actionnement du dispositif d'actionnement des freins et sont attribués par paires aux modules (10) de roue.

4. Système de freinage selon l'une des revendications précédentes, **caractérisé en ce que** les dispositifs de communication (14, 14', 14 ") sont formés de systèmes de bus série.

5. Système de freinage selon l'une des revendications précédentes, **caractérisé en ce que** les données qui peuvent être échangées par l'intermédiaire des dispositifs de communication (14, 14', 14 ") contiennent les données de détection des détecteurs (S1 à S4).

6. Système de freinage selon l'une des revendications précédentes, **caractérisé en ce que** les modules (10) de freinage présentent chacun un dispositif (11) de détermination de l'intensité d'actionnement du dispositif d'actionnement des freins.

7. Système de freinage selon l'une des revendications précédentes, **caractérisé en ce que** le système de freinage est un système de freinage de voiture automobile présentant quatre roues freinables (13).
